# EUROPÄISCHE PATENTSCHRIFT

(11) **EP 2 122 715 B1**
(45) Veröffentlichungstag und Bekanntmachung des Hinweises auf die Patenterteilung: **10.11.2010**
(21) Anmeldenummer: 08708692.2
(22) Anmeldetag: 05.02.2008
(51) Int. Cl.: H01M 10/0565

(54) **GALVANISCHES ELEMENT MIT EINEM MELAMIN/FORMALDEHYD-SCHAUMSTOFF**
GALVANIC ELEMENT COMPRISING A MELAMINE/FORMALDEHYDE FOAMED PLASTIC
ÉLÉMENT GALVANIQUE POURVU D'UNE MOUSSE DE MÉLANINE-FORMALDÉHYDE

(30) Priorität: 08.02.2007 EP 07101963; 05.03.2007 EP 07103507
(43) Veröffentlichungstag der Anmeldung: 25.11.2009
(73) Patentinhaber: BASF SE, 67056 Ludwigshafen (DE)
(72) Erfinder: QUADBECK-SEEGER, Hans-Jürgen, 67098 Bad Dürkheim (DE); ALTEHELD, Armin, 55543 Bad Kreuznach (DE); HAHN, Klaus, 67281 Kirchheim (DE); MÖCK, Christof, 68259 Mannheim (DE); VATH, Bernhard, 68259 Mannheim (DE)
(86) Internationale Anmeldenummer: PCT/EP2008/051391
(87) Internationale Veröffentlichungsnummer: WO 2008/095922

(56) Entgegenhaltungen:
- WO-A-01/83877
- WO-A-2007/003608
- US-A1- 2003 114 614

## Beschreibung

Die Erfindung betrifft ein Galvanisches Element gemäß Anspruch 1, welches einen offenzelligen Schaumstoff auf Basis eines Melamin/Formaldehyd-Schaumstoffes enthält, wobei die Zellporen ganz oder teilweise mit einem fließfähigen Elektrolyten gefüllt sind, sowie Verfahren zur Herstellung einer Batterie, Akkumulator oder Brennstoffzelle.

Offenzellige Schaumstoffe auf Basis eines Melamin/Formaldehyd-Kondensationsproduktes sind für verschiedene wärme- und schalldämmende Anwendungen in Gebäuden und Fahrzeugen, sowie als isolierendes und stoßdämmendes Verpackungsmaterial bekannt. Die offenzellige Struktur erlaubt die Aufnahme und Speicherung geeigneter Reinigungs- Schleif- und Poliermittel bei der Anwendung als Reinigungs-Schleif- und Polierschwamm (WO 01/94436).

Die EP-A 1 498 680 beschreibt eine Thermospeichereinheit, die einen offenzelligen Schaumstoff auf Basis eines Melamin/Formaldehyd-Kondensationsproduktes enthält, dessen Zellporen ganz oder teilweise mit einem fließfähigen Wärmeträger gefüllt sind, sowie dessen Herstellung und Verwendung als Kühl- und Warmhalteakku.

Ein Flüssigkeitsspeicher aus einem offenzelligen Schaumstoff auf Basis eines Melamin/Formaldehyd-Kondensationsproduktes mit einer Ummantelung aus Metall oder Kunststoff, sowie Verwendung als Treibstofftank, Öltank, Tankcontainer für Tankfahrzeuge, Tankanhänger oder Tankschiffe, insbesondere zur Lagerung oder Transport von flüssigen Gefahrstoffen, umweltgefährdenden Stoffe oder kryogenen Flüssigkeiten ist aus WO 2007/003608 bekannt.

Herkömmliche Batterien können bei Beschädigung der Außenhaut leicht auslaufen. Trockenbatterien enthalten meist ein Verdickungsmittel, z.B. Stärke. Dieses Verdickungsmittel erhöht die Viskosität des Elektrolyten, wodurch in der Regel die lonenbeweglichkeit gesenkt wird. Zudem müssen Elektrolyte und Verdickungsmittel aufeinander abgestimmt sein, um Inkompatibilitäten (z.B. Ausfällen von Salzen) zu vermeiden Verdickungsmittel benötigen einige Zeit zum Aufnehmen der Flüssigkeit oder müssen z.B. durch mechanisches Rühren in der flüssigen Phase gelöst werden.

Aufgabe der vorliegenden Erfindung war es, den vorgenannten Nachteilen abzuhelfen und ein galvanisches Elementbereitzustellen, das mit einem fließfähigen Elektrolyten weitgehend auslaufsicher gefüllt ist.

Demgemäss wurde das oben beschriebene galvanische Element gefunden.

Als offenzellige Schaumstoffe werden bevorzugt elastische Schaumstoffe auf Basis eines Melamin/Formaldehyd-Kondensationsproduktes mit einer spezifischen Dichte von 5 bis 100 g/l, insbesondere von 8 bis 20 g/l, verwendet. Die Zellzahl liegt üblicherweise im Bereich von 50 bis 300 Zellen/25 mm. Die Zugfestigkeit liegt bevorzugt im Bereich von 100 bis 150 kPa und die Bruchdehnung im Bereich von 8 bis 20%.

Zur Herstellung kann nach EP-A 071 672 oder EP-A 037 470 eine hochkonzentrierte, treibmittelhaltige Lösung oder Dispersion eines Melamin-Formaldehyd-Vorkondensates mit Heißluft, Wasserdampf oder durch Mikrowellenbestrahlung verschäumt und ausgehärtet werden. Derartige Schaumstoffe sind im Handel unter der Bezeichnung Basotect® der Firma BASF Aktiengesellschaft erhältlich.

Das Molverhältnis Melamin/Formaldehyd liegt im allgemeinen im Bereich von 1 : 1 und 1:5. Zur Herstellung besonders formaldehydarmer Schaumstoffe wird das Molverhältnis im Bereich von 1 : 1,3 bis 1 : 1,8 gewählt und ein sulfitgruppenfreies Vorkondensat eingesetzt, wie z. B in WO 01/94436 beschrieben.

Um die anwendungstechnischen Eigenschaften zu verbessern, können die Schaumstoffe anschließend getempert und verpresst werden. Die Schaumstoffe können zur gewünschten Form und Dicke zugeschnitten und ein- oder beidseitig mit Deckschichten kaschiert werden. Im Falle der Ummantelung mit einer Kunststofffolie ist eine Deckschicht in der Regel nicht notwendig.

Für Hochtemperaturanwendungen kann der offenzellige Schaumstoff auf Basis eines Melamin/Formaldehyd-Kondensationsproduktes bei Temperaturen über 200°C, bevorzugt bei Temperaturen im Bereich von 200 bis 500°C, teilweise oder vollständig karbonisiert werden. Der Schaumstoff versprödet je nach Karbonisierungsgrad, jedoch bleiben die Stege der offenzelligen Schaumstruktur weitgehend erhalten, und man erhält somit einen teilcarbonisierten, hochtemperaturbeständigen Werkstoff, der sich insbesondere für den Einsatz in Brennstoffzellen oder als Katalysatorträger eignet.

Die Carbonisierung des Schaumstoffs kann durch Imprägnierung mit carboniserenden Substanzen, beispielsweise Pech oder Kohlenhydraten, verbessert sein.

Das galvanische Element kann z. B in Batterien oder Brennstoffzellen eingesetzt werden. Der fließfähige Elektrolyt wird je nach Anwendungszweck und Temperaturbereich ausgewählt. Er sollte zumindest in Teilbereichen der Temperaturen bei der Anwendung oder Befüllung, in der Regel bei Raumtemperatur fließfähig sein. Als Elektrolyt wird bevorzugt eine ionische Flüssigkeit, beispielsweise (1-Butyl-3-methylimidazoliumacetat), eine flüssige Lösung von Ionen oder eine Salzschmelze, beispielsweise von Lithium-, Natrium-, Kalium- , Cäsium- oder Zink- halogeniden, - nitraten oder -sulfaten oder Säuren, wie Carbonsäuren, Salzsäure oder Schwefelsäure eingesetzt.

Aufgrund der geringen Dichte des Schaumstoffes und der Offenzelligkeit sind über 95 Vol.-%, insbesondere über 98 Vol.-% des mit dem offenzelligen Schaumstoff ausgefüllten galvanischen Elementes zur Aufnahme der Flüssigkeit verfügbar.

Der offenzellige Schaumstoff des galvanischen Elementes wird bevorzugt mit einem gegenüber dem Elektrolyten beständigen Ummantelung versehen. Bevorzugt besteht die Ummantelung aus einer Folie aus Metall oder Kunststoff, beispielweise Polyolefin, wie Polyethylen oder Polypropylen.

Die Ummantelung kann zusätzlich eine wärmedämmende Mantelschicht, z. B. aus Polyurethanschaumstoff und/oder Flüssigkeitssperrschicht, wie Kunststofffilme enthalten. Die Ummantelung dient der Stabilität und dem Schutz des Flüssigkeitsspeichers. Der Querschnitt ist in der Regel rund oder oval.

Der flüssige Elektrolyt dringt in den offenzelligen Schaumstoff und verhindert ein ungewolltes Auslaufen. Daher bleibt der flüssige Elektrolyt auch bei einer Beschädigung der Ummantelung weitgehend in den Poren des Schaumstoffes gebunden und ein Auslaufen wird verhindert.

Je nachdem, ob eine höhere Speicherfähigkeit oder Beweglichkeit des flüssigen Elektrolyten gewünscht wird, können die Kapillarkräfte durch Änderung der Zellgröße oder der Hydrophobie bzw. Hydrophilie des offenzelligen Schaumstoffs gezielt angepasst werden. In Abhängigkeit von der chemischen Art und Viskosität des flüssigen Elektrolyten kann die Oberfläche des Zellgerüstes des offenzelligen Schaumstoffs ganz oder teilweise mit einem Hydrophobierungsmittel, beispielsweise einer wässrigen Emulsion eines Silikon- oder Fluoralkylesters beschichtet werden.

Aufgrund der Elastizität des offenzelligen Schaumstoffes kann dieser auf einfache Weise in bereits vorgefertigte Tanks eingefügt werden. Kleinere Behälter können auch mit Schaumstoffflocken befüllt werden.

Selbst bei tiefen Temperaturen, beispielsweise unter -80°C bleibt der Schaumstoff elastisch. Eine Schädigung durch Verspröden tritt nicht auf. Das erfindungsgemäße galvanische Element ist daher auch zur Aufnahme kryogener Flüssigkeiten, beispielsweise flüssiger Luft, Stickstoff, Wasserstoff, Edelgasen, wie Argon, Neon oder Helium sowie Kohlenwasserstoffen wie Propylen oder Methan geeignet.

Besonders bevorzugt werden ein oder mehrere erfindungsgemäße galvanische Elemente in Batterien oder Brennstoffzellen, gegebenenfalls auch in Kombination mit herkömmlichen galvanischen Elementen verwendet. Als Elektroden können die für Batterien oder Brennstoffzellen üblichen Elektroden aus Metallen, wie Kupfer, Eisen, Zink oder Metalllegierungen sowie den verschiedenen Kohlenstoffmodifikationen, beispielsweise Graphit, eingesetzt werden. Bei entsprechender Leitfähigkeit, beispielsweise leitfähigen Polymeren oder Metallen kann die Ummantelung gleichzeitig die Funktion einer Elektrode übernehmen.

Eine Batterie mit dem erfindungsgemäßen galvanischen Element ist auslaufsicher wie eine Trockenbatterie, kann also in jeder Position genutzt werden. Der offenzellige Schaumstoff wirkt aufgrund von Kapillarkräften als Auslaufschutz. Es ist kein Verdickungsmittel notwendig und die Ionenbeweglichkeit wird überhaupt nicht beeinträchtigt. Eine mit dem offenzelligen Schaumstoff gefüllte Batterie oder Akkumulator kann sehr einfach wieder mit Flüssigkeit aufgefüllt werden, ist aber auslaufsicher. Die Flüssigkeit wird sofort im Schaumstoff aufgenommen.

Gemäß dem Stand der Technik eingesetzte leistungsstarke Akkumulatoren in Mobiltelefonen oder Notebooks beruhen häufig auf der Basis von Li-Ionen Batterien. Diese können sich bei Erwärmung oder im Falle von Kurzschlüssen explosionsartig und unter Bildung von Feuer zersetzen, was beispielsweise eine Einführung der Technik in Elektroautos oder Autos mit Hydridantrieb erschwert. Durch den Einsatz eines Schaumstoffs wird selbst im Falle einer explosionsartigen Zersetzung die Energie vorteilhaft dissipiert und ein möglicher Brand tritt nur unmittelbar an der Leckage auf.

### Beispiele

### Beispiel 1 (Daniel-Element)

In ein Becherglas wurde eine 1 molare Zinksulfatlösung gegeben, in die ein Streifen eines Zinkblechs eingetaucht wurde. In ein zweites Becherglas wird eine 1 molare Kupfersulfatlösung gegeben. In dieses Gefäß wird ein Kupferblech getaucht. Beide Metallbleche wurden über Kabel mit einem Spannungsprüfer verbunden. Es wurde keine Spannung gemessen. Ein Zylinder aus Basotect® wird mit einer 1 molaren Kaliumnitratlösung getränkt. Der getränkte Schaumstoff wurde mit einem Ende in die Kupfersulfatlösung und mit dem anderen Ende in die Zinksulfatlösung getaucht. Nach dem Verbinden beider Gefäße über die Salzbrücke wird eine Spannung von 1,1 V gemessen.

### Beispiel 2

Ein Kupferrohr wurde mit Basotect® gefüllt. Der Schaumstoff wurde mit einer konzentrierten Natriumchloridlösung getränkt. In das Zentrum des Schaumstoffs wurde ein verzinkter Nagel gesteckt. Über ein Kabel mit angeschlossenem Spannungsmesser werden der Zinknagel und das Kupferrohr verbunden. Es wurde eine Spannung von 0,8V gemessen. Basotect® diente als Abstandshalter, ist Auslaufschutz und beeinträchtigt den Ionentransport nicht.

### Beispiel 3

Es wurde analog Beispiel 2 vorgegangen, wobei eine Ionische Flüssigkeit (1-Butyl-3-methylimidazoliumacetat) anstelle der Natriumchloridlösung eingesetzt wurde. Es wurde ebenfalls eine Spannung von 0,8V ermittelt. Ionische Flüssigkeiten besitzen einen geringen Dampfdruck, das System ist somit sehr stabil.

### Beispiel 4 (Teilkarbonisiertes Basotect®)

Eine Probe Basotect® wurde 10 Stunden bei 200°C im Trockenschrank getempert. Anschließend wurde das Material unter einer Stickstoffatmosphäre zwei Stunden auf 300°C und anschließend eine Stunde auf 400°C erhitzt. Der erhaltene schwarz verfärbte Rückstand weist einen Gewichtsverlust von 30% auf. Die Elementaranalyse lieferte folgende Ergebnisse:

| | | | |
|---|---|---|---|
| Nach 10h bei 200°C: | C = 35,2 Gew.-%, | H = 4,8 Gew.-%, | N = 10,8 Gew.-% |
| Nach Teilcarbonisierung: | C = 44,0 Gew.-%, | H = 2,1 Gew.-%, | N = 7,1 Gew.-% |

Die Schaumstruktur wurde durch die Teilcarbonisierung kaum zerstört. Das erhaltene Material weist verschlechterte mechanische Eigenschaften ist aber nicht vollständig versprödet.

### Beispiel 5

Eine Probe Basotect® wurde gewaschen und derart mit der offenen Flamme eines Bunsenbrenners verbrannt, dass das Material vollständig verkohlt wurde, die Schaumstruktur aber weitgehend erhalten blieb. Der Verbrennungsrückstand betrug etwa 7 Gew.-% der eingesetzten Masse. Der Rückstand bestand aus einer offenzelligen porösen und zusammenhängenden Struktur. Die mechanischen Eigenschaften, insbesondere die Elastizität, haben sich deutlich verschlechtert.

Die chemische Analyse der Elemente Kohlenstoff, Stickstoff und Wasserstoff des Verbrennungsrückstands zeigt Abnahme des Wasserstoffanteils. Es werden folgende Werte bestimmt: 46,8 Mass.-% Kohlenstoff, 36,1 Mass.-% Stickstoff und 2,0 Mass.-% Wasserstoff.

Die teilkarbonisierten Schaumstoffstrukturen der Beispiele 4 und 5 zeigen auch über 250°C eine hohe Temperaturstabilität und geringe Formaldehydemission. Sie können zur Aufnahme von Salzschmelzen in galvanischen Elementen eingesetzt werden.

## Patentansprüche

1. Galvanisches Element, enthaltend einen offenzelligen Schaumstoff auf Basis eines Melamin/Formaldehyd-Kondensationsproduktes, **dadurch gekennzeichnet, dass** die Zellporen ganz oder teilweise mit einem fließfähigen Elektrolyten gefüllt sind und als Elektrolyt eine ionische Flüssigkeit, eine flüssige Lösung von Ionen oder eine Salzschmelze eingesetzt wird.

2. Galvanisches Element nach Anspruch 1, **dadurch gekennzeichnet, dass** der offenzellige Schaumstoff mit einem gegenüber dem Elektrolyten beständiger Ummantelung versehen ist.

3. Galvanisches Element nach Anspruch 2, **dadurch gekennzeichnet, dass** die Ummantelung aus einer Folie aus Metall oder Kunststoff besteht.

4. Galvanisches Element nach einem der Ansprüche 1 bis 3, **dadurch gekennzeichnet, dass** sie ein Melamin/Formaldehyd-Kondensationsprodukt mit einem Molverhältnis Melamin/Formaldehyd im Bereich von 1 : 1 und 1 : 5 enthält.

5. Galvanisches Element nach einem der Ansprüche 1 bis 4, **dadurch gekennzeichnet, dass** das Melamin/Formaldehyd-Kondensationsprodukt eine spezifische Dichte von 5 bis 100 g/l aufweist.

6. Galvanisches Element nach einem der Ansprüche 1 bis 5, **dadurch gekennzeichnet, dass** der offenzellige Schaumstoff bei Temperaturen im Bereich von 200 bis 500°C teilweise oder vollständig karbonisiert wurde.

7. Batterie, Akkumulator oder Brennstoffzelle, enthaltend ein oder mehrere Galvanische Elemente nach einem der Ansprüche 1 bis 5.

8. Verfahren zur Herstellung einer Batterie oder Brennstoffzelle nach Anspruch 7, **dadurch gekennzeichnet, dass** man einen offenzelligen Schaumstoff auf Basis eines Melamin/Formaldehyd-Kondensationsproduktes mit einer Ummantelung und ein oder mehreren Elektroden versieht und vor dem vollständigen Verschließen mit einem fließfähigen Elektrolyten füllt.

## Claims

1. An electrochemical element comprising an open-cell foam based on a melamine/formaldehyde condensate, wherein the cell pores are completely or partly filled with a flowable electrolyte and an ionic liquid, a liquid solution of ions or a salt melt is used as the electrolyte.

2. The electrochemical element according to claim 1, wherein the open-cell foam is provided with a covering stable to the electrolyte.

3. The electrochemical element according to claim 2, wherein the covering consists of a sheet of metal or plastic.

4. The electrochemical element according to any of claims 1 to 3, which comprises a melamine/formaldehyde condensate having a molar melamine/formaldehyde ratio in the range of from 1:1 to 1:5.

5. The electrochemical element according to any of claims 1 to 4, wherein the melamine/formaldehyde condensate has a specific density of from 5 to 100 g/l.

6. The electrochemical element according to any of claims 1 to 5, wherein the open-cell foam was partly or completely carbonized at temperatures in the range of from 200 to 500°C.

7. A battery, accumulator or fuel cell comprising one or more electrochemical elements according to any of claims 1 to 5.

8. A process for the production of a battery or fuel cell according to claim 7, wherein an open-cell foam based on a melamine/formaldehyde condensate is provided with a covering and one or more electrodes and is filled with a flowable electrolyte before being completely sealed.

## Revendications

1. Élément galvanique, contenant une mousse à cellules ouvertes à base d'un produit de condensation mélamine/formaldéhyde, **caractérisé en ce que** les pores cellulaires sont remplis en totalité ou en partie avec un électrolyte fluide, et un liquide ionique, une solution liquide d'ions ou un sel fondu est utilisé en tant qu'électrolyte.

2. Élément galvanique selon la revendication 1, **caractérisé en ce que** la mousse à cellules ouvertes est munie d'un revêtement résistant à l'électrolyte.

3. Élément galvanique selon la revendication 2, **caractérisé en ce que** le revêtement est constitué d'un film en métal ou en plastique.

4. Élément galvanique selon l'une quelconque des revendications 1 à 3, **caractérisé en ce qu'**il contient un produit de condensation mélamine/formaldéhyde ayant un rapport molaire mélamine/formaldéhyde dans la plage allant de 1:1 à 1:5.

5. Élément galvanique selon l'une quelconque des revendications 1 à 4, **caractérisé en ce que** le produit de condensation mélamine/formaldéhyde présente une densité spécifique de 5 à 100 g/l.

6. Élément galvanique selon l'une quelconque des revendications 1 à 5, **caractérisé en ce que** la mousse à cellules ouvertes a été carbonisée en partie ou en totalité à des températures dans la plage allant de 200 à 500 °C.

7. Batterie, accumulateur ou pile à combustible, contenant un ou plusieurs éléments galvaniques selon l'une quelconque des revendications 1 à 5.

8. Procédé de fabrication d'une batterie ou d'une pile à combustible selon la revendication 7, **caractérisé en ce qu'**une mousse à cellules ouvertes à base d'un produit de condensation mélamine/formaldéhyde est munie d'un revêtement et d'une ou de plusieurs électrodes, et remplie avec un électrolyte fluide avant la fermeture totale.
